# EUROPÄISCHE PATENTSCHRIFT

(11) **EP 2 244 594 B1**
(45) Veröffentlichungstag und Bekanntmachung des Hinweises auf die Patenterteilung: **24.10.2012**
(21) Anmeldenummer: 09715949.5
(22) Anmeldetag: 18.02.2009
(51) Int. Cl.: A23L 2/54, B01F 3/04, B01F 5/00, B01F 5/06

(54) **VORRICHTUNG ZUM BEGASEN VON FLÜSSIGKEITEN**
DEVICE FOR GASSING FLUIDS
DISPOSITIF DE GAZÉIFICATION DE LIQUIDES

(30) Priorität: 27.02.2008 DE 202008002762 U
(43) Veröffentlichungstag der Anmeldung: 03.11.2010
(73) Patentinhaber: DSI Getränkearmaturen GmbH, 59069 Hamm-Rhynern (DE)
(72) Erfinder: RÖTTGER, Konstantin, 59757 Arnsberg (DE)
(74) Vertreter: Griepenstroh, Jörg
(86) Internationale Anmeldenummer: PCT/DE2009/000224
(87) Internationale Veröffentlichungsnummer: WO 2009/106041

(56) Entgegenhaltungen:
- EP-A- 2 060 318
- DE-A1- 19 849 628
- DE-A1-102006 014 814
- DE-A1-102007 014 611
- US-A- 3 761 066
- US-A1- 2003 188 486
- US-A1- 2004 251 566

## Beschreibung

Die Erfindung betrifft eine Vorrichtung zum Begasen von Flüssigkeiten mit den Merkmalen des Patentanspruchs 1.

Es zählt zum Stand der Technik, Wasser durch Zuführen von Gasen, insbesondere Kohlenstoffdioxid, aufzubereiten. Hierbei wird hinsichtlich des Drucks gesteuertes Kohlenstoffdioxid in einen mit Wasser oder einer andere Trinkflüssigkeit gefüllten Behälter geleitet. Dadurch wird die Flüssigkeit karbonisiert, um anschließend über ein Zapfventil entnommen und ausgeschenkt zu werden. Diese Karbonisiereinrichtungen sind in unterschiedlichster Weise bekannt, da in Abhängigkeit von dem auszuschenkenden Getränk unterschiedliche Anlagen erforderlich sind im Hinblick auf die Flüssigkeitszuleitung, Kühlung, Druckregelung etc.

Die US 3 761 066 A offenbart eine Vorrichtung zum Begasen von Flüssigkeiten mit einem lang gestreckten, horizontal orientierten Gehäuse, das an seinem stromaufwärts gelegenen Ende einen Einlassanschluss für die Flüssigkeit und an seinem stromabwärts gelegenen Ende einen Auslassanschluss für die zu begasende Flüssigkeit besitzt. Das Gehäuse weist seitlich zwischen diesen beiden Enden einen Gaseinlass auf. Der Innenraum des Gehäuses gliedert sich in eine Wirbelkammer und eine mit der Wirbelkammer in Strömungsrichtung der Flüssigkeit nachgeschaltete Mischkammer, die mit Einbauten versehen ist, um das Wasser und das CO₂ in kleine Blasen aufzubrechen, um eine maximale Oberfläche des Wassers zu erzeugen, die mit CO₂ in Kontakt gelangt. Zwischen der Wirbelkammer und der Mischkammer befindet sich eine Engstelle. Die Wirbelkammer verjüngt sich in Richtung der Engstelle. Der Nachteil dieser Anordnung ist, dass das Verwirbeln der Flüssigkeiten mit hohem Reibungswiderstand erfolgt. Die Einbauten erhöhen diesen Reibungswiderstand noch. Derartige Rohrsiebkarbonatoren lassen sich durch Rückspülen nur mit erhöhtem Zeitaufwand rückstandfrei und hygienisch reinigen. Ein schneller Produktwechsel ist mithin schwierig.

Eine vergleichbare Anordnung wird in der US-Patentanmeldung US 2003/0188486 A1 offenbart. Filtereinbauten erschweren jedoch die Reinigung. Das gilt auch für die in der DE 198 49 628 A1 offenbarte Anordnung.

Der Erfindung liegt die Aufgabe zu Grunde, eine neuartige Vorrichtung zum Begasen von Flüssigkeiten, insbesondere zum Karbonisieren von Trinkflüssigkeiten, aufzuzeigen.

Eine solche Vorrichtung ist Gegenstand des Patentanspruchs 1.

Vorteilhafte Weiterbildungen dieser Vorrichtung sind Gegenstand der Unteransprüche.

Die Vorrichtung umfasst ein lang gestrecktes Gehäuse, das an seinem oberen Ende einen Einlassanschluss für die Flüssigkeit und am gegenüberliegenden unteren Ende einen Auslassanschluss für die Flüssigkeit aufweist. Das Gehäuse wird von oben nach unten von der zu begasenden Flüssigkeit durchströmt. Die Vorrichtung arbeitet im Durchlaufverfahren. Das obere Ende des Gehäuses befindet sich insbesondere vertikal oberhalb des unteren Endes des Gehäuses. Grundsätzlich ist das Gehäuse vertikal orientiert.

Das Gehäuse weist an seinem oberen Ende zusätzlich einen Gaseinlass auf, um die Flüssigkeit mit dem Gas in Kontakt zu bringen.

Der Innenraum des Gehäuses gliedert sich in eine Wirbelkammer und eine der Wirbelkammer in Strömungsrichtung der Flüssigkeit nachgeschaltete Mischkammer. Zwischen der Wirbelkammer und der Mischkammer befindet sich eine Engstelle. Die Wirbelkammer verjüngt sich in Richtung der Engstelle trichterförmig.

Das Besondere bei der erfindungsgemäßen Vorrichtung ist, dass die Flüssigkeit beim Durchströmen des Gehäuses in der Wirbelkammer in eine Wirbelbewegung versetzt wird, über die Engstelle strahlförmig aus der Wirbelkammer austritt und in die Mischkammer eintritt. Der Querschnitt der Engstelle ist daher deutlich geringer als der Querschnitt der vorgelagerten Wirbelkammer bzw. der nachgeschalteten Mischkammer.

Eine Verwirbelung tritt immer dann ein, wenn am Auslassanschluss Flüssigkeit entnommen, d.h. gezapft, wird. Für die Flüssigkeitszufuhr sorgt vorzugsweise eine elektrische Membranpumpe bei einem statischen Ausgangsdruck von z.B. 7 bar, einem dynamischen Druck von ca. 5,5 bar und einer Durchflussmenge von z.B. 2 Liter je Minute. Die Gaszufuhr wird geregelt über einen Druckregler, der bei den vorstehend genannten Druckbereichen der Flüssigkeit auf ca. 7 bar eingestellt wird. Ein Nadelventil zwischen dem Druckregler und dem Gaseinlass regelt die Gasmenge, ein 2/2-Wege-Magnetventil ist zur Absperrung der Gaszufuhr verwendbar.

Wenn die Pumpe läuft, wird das Magnetventil geöffnet und Gas wird zudosiert. Schaltet die Pumpe über einen Druckschalter ab, weil keine Flüssigkeit mehr entnommen wird, schließt das Magnetventil wieder. Beim Zapfvorgang, d.h. bei der Entnahme der Flüssigkeit, strömt die Flüssigkeit über den Einlassanschluss in die Wirbelkammer. Auf Grund des dynamischen Druckverlustes im System wird Gas zudosiert. Durch die Fließgeschwindigkeit innerhalb der Wirbelkammer bildet sich dort ein Strudel aus, in welchem die Gasblasen mitgerissen werden. Dieser Flüssigkeits-/Gasstrahl wird über die Engstelle, bei der es sich vorzugsweise um eine zentrische Trichterbohrung handelt, in die Mischkammer geleitet. Dabei bildet sich am Austritt in die Mischkammer bzw. im Anschluss an die Engstelle ein in sich verdrallter Flüssigkeits-/Gasstrahl, der für eine sehr starke Verwirbelung der Flüssigkeit und des Gases sorgt. Dabei kann das Gas in der Flüssigkeit in Lösung gehen. Die nicht gelösten Gasblasen steigen wieder auf und werden durch den Flüssigkeits-/Gasstrahl wieder neu verwirbelt. Aus diesem Grund ist die erfindungsgemäße Vorrichtung bzw. das Gehäuse vertikal montiert.

Um das Verwirbeln der Flüssigkeiten mit möglichst geringem Reibungswiderstand zu ermöglichen, besitzt sowohl die Wirbelkammer als auch die Mischkammer einen runden, ovalen oder elliptischen Querschnitt. Die Querschnittsflächen können sich hinsichtlich ihrer Größe und Form aber auch unterscheiden. Ein Flächenunterschied von +/- 10% der jeweils anderen Querschnittsfläche ist möglich. Am konstruktiv einfachsten ist es, wenn die Querschnittsflächen identisch in Geometrie und Größe sind.

Wichtig ist, dass die Mischkammer eine hinreichend große Längserstreckung aufweist, die größer ist als die Längserstreckung der Wirbelkammer. Es ist vorgesehen, dass die Länge der Mischkammer immer größer ist als die Länge der Wirbelkammer. Im Rahmen der Erfindung soll das Längenverhältnis von Mischkammer zu Wirbelkammer in einem Bereich von 3:1 bis 20:1 liegen, vorzugsweise in einem Bereich von 4:1 bis 10:1, insbesondere in einem Bereich von 5:1 bis 8:1, und insbesondere in einem Bereich von 6:1 bis 7:1.

Die Länge der Mischkammer ist von wesentlicher Bedeutung. Die Länge der Mischkammer hängt davon ab, wie viel Gas in der Flüssigkeit gelöst werden soll, d.h. wie lang der aus der Engstelle austretende Flüssigkeits-/Gasstrahl ist.

Wesentlich im Rahmen der Erfindung ist, dass die Mischkammer als freier Beruhigungsraum konfiguriert ist, d.h., dass keine Einbauten, insbesondere keine Sinterkörper, Schüttgut, oberflächenenrveiternde Zusätze oder ähnliche, zu weiteren Verwirbelungen führende Hindernisse im Strömungsraum der Mischkammer angeordnet sind. Die Mischkammer hat die Funktion, den Mischvorgang des in die Mischkammer eintretenden Flüssigkeits-/Gasstrahls abzuschließen, so dass sich möglichst alle Gasblasen in der Flüssigkeit lösen und nicht zusätzlich durch Einbauten in der Mischkammer verwirbelt werden.

Dass die Mischkammer frei ist von Einbauten und als Beruhigungsraum dient, ist ein Vorteil gegenüber porösem Festkörperimprägnieren, gegenüber Rohrsiebkarbonatoren, bei denen eine Vielzahl von Mischsieben aneinander gereiht sind und auch gegenüber Schüttgutkarbonatoren, bei denen ein Schüttgut mit hoher Oberfläche vorgesehen ist. Der entscheidende Vorteil ist, dass die freie Mischkammer in kürzester Zeit durch Spülen rückstandsfrei und hygienisch gereinigt werden kann, so dass ohne Umbaumaßnahmen kurz nacheinander unterschiedliche Flüssigkeiten begast bzw. imprägniert werden können. Es ist ein sehr schneller Produktwechsel möglich.

Es wird angestrebt, dass der mit Flüssigkeiten in Kontakt kommende Bereich möglichst spaltfrei ist und insofern die Übergänge zwischen der Mischkammer, der Wirbelkammer und dem Einsatz mit der Engstelle möglichst fließend sind. Das heißt, dass die aneinander grenzenden Durchmesser aufeinander abgestimmt sind. Insbesondere soll ein vor oder hinter der Engstelle angeordneter Trichter an seinem erweiterten Ende einen Trichterrand aufweisen, welcher der Innenkontur der sich anschließenden Wirbelkammer oder Mischkammer entspricht. Strömungstechnische Toträume sollen, so weit es geht, vermieden werden.

Eine Mischkammer im Sinne der Erfindung ist folglich ein Beruhigungsraum, in welchen der Flüssigkeits-/Gasstrahl eintritt. Der Beruhigungsraum bzw. die Mischkammer besitzt einen hinreichenden Durchmesser, der insbesondere größer ist als der Durchmesser einer Zuführleitung zur Wirbelkammer bzw. einer Auslassleitung, durch welche eine gasimprägnierte Flüssigkeit wieder abgeleitet wird. Ein hinreichender Durchmesser der Mischkammer ist wichtig, damit die von dem Flüssigkeits-/Gasstrahl mitgerissenen Gasbläschen genug Raum haben, um wieder nach oben aufsteigen zu können. Daher weist das Ende der Mischkammer einen Auslassanschluss auf, der zu einer Querschnittsreduzierung des Strömungspfads führt. An diesem Auslassanschluss kann eine weiterführende Fluidleitung angeschlossen sein, deren Querschnitt allerdings wenigstens um den Faktor 4 kleiner ist als der Querschnitt im Bereich der Mischkammer. Als Mischkammer ist daher nicht jeder Leitungsabschnitt zu verstehen, der sich an eine irgendwie gestaltete Engstelle eines Strömungspfads anschließt, sondern nur solche Mischkammern, bei denen das ausströmseitige Ende durch eine Querschnittsverengung gekennzeichnet ist.

Um eine Verwirbelung in der Wirbelkammer zu erreichen, ist vorgesehen, dass der Einströmkanal für die Flüssigkeit exzentrisch zur Mittellängsachse der Wirbelkammer angeordnet ist. Insbesondere weist der Einströmkanal radial nach außen, so dass die Flüssigkeit beim Einströmen von innen nach außen auf die Wand des Gehäuses strömt, dort abgelenkt wird und zumindest teilweise bereits in Umfangsrichtung strömt.

In jedem Fall ist der Punkt, an dem die Flüssigkeit in die Wirbelkammer einströmt, radial zur Engstelle versetzt angeordnet. Die Engstelle ist vorzugsweise zentrisch innerhalb der bevorzugt kreisrunden Wirbelkammer angeordnet, während der Einströmkanal möglichst exzentrisch zur Mittellängsachse der Wirbelkammer und damit zur Engstelle angeordnet ist.

Damit die Vorrichtung leicht zu reinigen ist, weist der Gasauslass an seinem der Wirbelkammer zugewandten Ende ein als Rückschlagventil dienendes Lippenventil auf. Dieses Lippenventil hat den Vorteil, dass der gesamte Innenraum der Vorrichtung nach dem Ablassen der Flüssigkeit mit einer Desinfektionslösung geflutet und gespült werden kann. Innerhalb des Gehäuses befinden sich daher keine Spalten und/oder Blindleitungen sowie Hohlräume, die nicht von der Reinigungslösung benetzt werden könnten. Die Benetzbarkeit sämtlicher Flächen ist bei anderen Lösungen teilweise problematisch. Auf Grund der vertikalen Anordnung kann die Desinfektionslösung vollständig abfließen, ebenso wie in einem nachfolgenden Spülvorgang etwaige Reste der Desinfektionslösung vollständig entfernt werden können. Eine Demontage der erfindungsgemäßen Vorrichtung ist nicht erforderlich.

Es wird als besonders vorteilhaft angesehen, wenn auch der Einlasskanal des Gaseinlasses nicht zentrisch, also fluchtend, zur Engstelle angeordnet ist, sondern koaxial zur Mittellängsachse des Gehäuses verläuft. Der Verwirbelungseffekt ist dadurch wesentlich stärker.

Die Engstelle kann an dem Gehäuse selbst ausgebildet sein oder aber in einem an dem Gehäuse fixierten Einsatz vorgesehen sein. Bei der Engstelle handelt es sich insbesondere um eine trichterförmige Bohrung. Lediglich der im Durchmesser kleinste Bereich der Engstelle kann als zylindrische Bohrung ausgeführt sein.

Das Verhältnis der Querschnittsfläche der Engstelle zur maximalen Querschnittsfläche der Wirbelkammer liegt in einem Bereich von 1 % bis 5 %, vorzugsweise in einem Bereich von 1 % bis 2 %.

Es hat sich als vorteilhaft erwiesen, wenn sich die Engstelle zur Mischkammer hin trichterförmig erweitert. In der Mischkammer nach oben aufsteigende Gasblasen werden durch die Trichterform zur Mitte des Trichters, d.h. zur Engstelle, hin geleitet und dort von dem Flüssigkeits-/Gasgemischstrahl mitgerissen. Der der Engstelle nachgeschaltete Trichter kann allerdings einen weitaus größere Trichterwinkel aufweisen als der Trichter vor der Engstelle. Der Trichter vor der Engstelle hat wesentlichen Anteil an der Wirbelbewegung des Flüssigkeits-/Gasgemisches, während der nachgeschaltete Trichter eine Sammelfunktion hat, um aufsteigende Gasblasen wieder dem Flüssigkeits-/Gasstrahl zuzuführen.

Zur Kontrolle der Verwirbelungsvorgänge kann die Wirbelkammer aus einem durchsichtigen Material, insbesondere aus Plexiglas, gefertigt sein. Ebenso kann der Einsatz mit der Engstelle aus einem durchsichtigen Material bestehen.

Die Vorteile, den Verwirbelungs- und Durchmischungsprozess zu beobachten, kommen aber insbesondere im Bereich der Mischkammer zum Tragen. Insbesondere soll daher die Mischkammer einen sich in Längsrichtung erstreckenden, durchsichtigen Bereich aufweisen, der mit einer sich in Längsrichtung erstreckenden Skala versehen ist. Selbstverständlich kann auch die Mischkammer zumindest teilweise, aber auch insgesamt, aus einem durchsichtigen Material gefertigt sein. Die Skala kann dazu verwendet werden, während des Mischvorgangs die Strahllänge innerhalb der Mischkammer abzulesen, um aus der Strahllänge Rückschlüsse auf den Grad der Begasung zu ziehen. Wenn die Flüssigkeit mehr Gas aufnehmen soll, weist der Strahl eine größere Länge auf, als wenn der Flüssigkeit weniger Gas beigemengt werden soll. Zudem ist der ganze Durchmischungs- und Verwirbelungsvorgang auch in optischer Hinsicht sehr ansprechend. Es ist daher vorstellbar, dass die bislang verdeckt montierten Vorrichtungen zur Begasung sichtbar im Ausschankbereich angeordnet werden und eventuell sogar be- oder durchleuchtet werden, um die Bewegungen der Gasblasen zu verfolgen.

Die erfindungsgemäße Vorrichtung ist insbesondere dafür vorgesehen, Kohlenstoffdioxid oder aber auch Sauerstoff in Flüssigkeiten, insbesondere Trinkflüssigkeiten, einzuleiten. Die Flüssigkeit der Vorrichtung, die bei der Verwendung von Kohlenstoffdioxid als auch Karbonator bezeichnet werden kann, soll vorzugsweise mit gekühlter Flüssigkeit gespeist werden. Das Funktionsprinzip erlaubt es aber auch, die Vorrichtung vor einer Kühleinrichtung zu platzieren, so dass die noch ungekühlte Flüssigkeit durch die erfindungsgemäße Vorrichtung strömt. Die Ergebnisse bezüglich der Gasanreicherung sind identisch.

Bei Verwendung von Kohlenstoffdioxid ist der Karbonisierungsgrad zudem abhängig von der Form und Art des Zapfhahns. Beste Ergebnisse werden erzielt mit einer so genannten Kompensatorausführung. Da auch die Fließgeschwindigkeit einen Einfluss auf den Gasanreicherungsgrad hat, empfiehlt es sich, in Strömungsrichtung kurz vor dem Zapfhahn einen handelsüblichen Mengenregler einzubauen, der den Durchfluss unabhängig vom Eingangsdruck auf z.B. 2 Liter je Minute regelt.

Über eine Gasmengenregelung, z.B. ein Nadelventil, kann die Gasanreicherung wahlweise eingestellt werden. Diese Funktion kann auch von einem elektromagnetischen Proportionalventil übernommen werden, welches in diesem Fall das 2/2-Wege-Magnetventil ersetzen würde. Damit kann der Anwender fast portionsweise den Anreicherungsgrad variieren. Die erfindungsgemäße Vorrichtung bzw. das Gehäuse kann z.B. in eine Zapfsäule integriert sein. Solange die Mischkammer lang genug ausgebildet ist, treten keine sichtbaren Gasblasen am Flüssigkeitsauslauf des Gehäuses auf, so dass ein störungsfreier Zapfbetrieb gewährleistet ist.

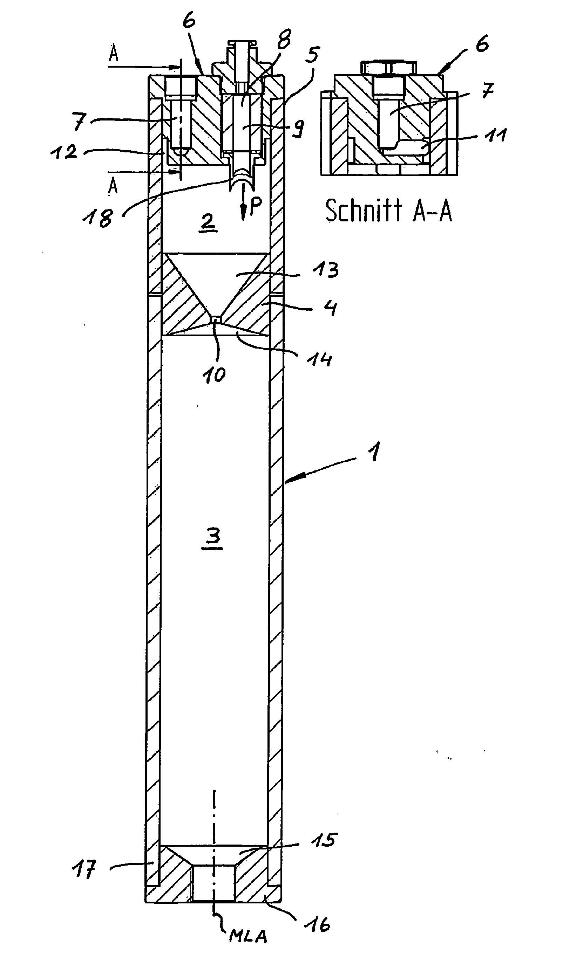

Die Erfindung ist nachfolgend anhand des in der Zeichnung dargestellten Ausführungsbeispiels näher erläutert.

Die Figur zeigt eine Vorrichtung zum Begasen von Flüssigkeiten. Die Vorrichtung umfasst ein zylindrisches Gehäuse 1, das sich in einen oberen Gehäuseabschnitt in Form einer Wirbelkammer 2 und einen unteren Gehäuseabschnitt in Form einer Mischkammer 3 gliedert. Zwischen der Wirbelkammer 2 und der Mischkammer 3 befindet sich ein Einsatz 4, der teilweise in die Wirbelkammer 2 und teilweise in die Mischkammer 3 ragt. Am oberen Ende 5 der Vorrichtung befindet sich ein Anschlusskopf 6, der auf der Stirnseite des rohrförmigen Gehäuses 1 der Wirbelkammer 2 aufliegt und darüber hinaus in die Wirbelkammer 2 ragt. Der Anschlusskopf 6 weist einen Einlassanschluss 7 für die einzuleitende Flüssigkeit auf sowie einen Gaseinlass 8 für das in die Flüssigkeit einzuleitende Gas. Es ist zu erkennen, dass der Gasstrom in Richtung des Pfeils P, also in Axialrichtung des Gehäuses 1 in die Wirbelkammer 2 eingeleitet wird. Der Einlasskanal 9 des Gaseinlasses 8 verläuft koaxial zur Mittellängsachse MLA des Gehäuses 1. Dahingegen ist eine Engstelle 10 des trichterförmig konfigurierten Einsatzes zwischen Wirbelkammer 2 und Mischkammer 3 zentrisch angeordnet.

Bei dem dargestellten Ausführungsbeispiel strömt die Flüssigkeit nicht in Axialrichtung in die Wirbelkammer 2 ein, sondern in Radialrichtung. Aus der Schnittdarstellung A-A wird deutlich, dass der in Axialrichtung verlaufende Einlassanschluss 7 für die Flüssigkeit in einen radial verlaufenden Einströmkanal 11 übergeht, der in einen Ringraum 12 zwischen dem Anschlusskopf 6 und der Innenwand der Wirbelkammer 2 mündet. Daher tritt sowohl das Gas als auch die Flüssigkeit exzentrisch zur Mittellängsachse MLA in die Wirbelkammer 2 ein.

Die Wirbelkammer 2 ist grundsätzlich zylindrisch konfiguriert und weist nur in ihrem oberen Bereich einen schmalen Ringraum auf. Die Wirbelkammer 2 verjüngt sich allerdings trichterförmig im Bereich des Einsatzes 4 bis zur Engstelle 10. Ein Trichter 13 vor der Engstelle 10 besitzt einen kleineren Trichterwinkel als ein Trichter 14 im Anschluss an die Engstelle 10. Beide Trichter 13, 14 sind in dem Einsatz 4 ausgebildet.

Sowohl der Einsatz 4 als auch die zylindrischen Bereiche der Wirbelkammer 2 sowie der Mischkammer 3 können aus einem durchsichtigen Material, insbesondere Plexiglas, gefertigt sein, um die Gasblasen, die in Lösung gehen, zu beobachten.

Grundsätzlich weist die Mischkammer 3 eine wesentliche größere Länge als die Wirbelkammer 2 auf. In diesem Ausführungsbeispiel ist die Mischkammer 3 etwa drei Mal so lang wie die Wirbelkammer 2. Hierbei wird der jeweilige Trichterbereich des Einsatzes 4 der Mischkammer 3 bzw. der Wirbelkammer 2 zugerechnet, ebenso wie der Ringraum 12 in die Länge der Wirbelkammer 2 einfließt. Auch ein Trichterbereich 15 an einem Auslassanschluss 16 am unteren Ende 17 zählt zur Länge der Mischkammer 3.

Der Gaseinlass 8 ist wirbelkammerseitig mit einem Lippenventil 18 versehen, so dass auch beim Reinigen der Vorrichtung keine Reinigungsflüssigkeit in den Gaseinlass 8 einströmen kann. Es gibt somit keine Hohlräume, in die eine Reinigungslösung nicht eindringen könnte bzw. die nicht anschließend ohne Demontage der Vorrichtung gespült werden könnten.

### Bezugszeichen:

- 1 -: Gehäuse
- 2 -: Wirbelkammer
- 3 -: Mischkammer
- 4 -: Einsatz
- 5 -: oberes Ende
- 6 -: Anschlusskopf
- 7 -: Einlassanschluss
- 8 -: Gaseinlass
- 9 -: Einlasskanal
- 10 -: Engstelle
- 11 -: Einströmkanal
- 12 -: Ringraum
- 13 -: Trichter
- 14 -: Trichter
- 15 -: Trichter
- 16 -: Auslassanschluss
- 17 -: unteres Ende
- 18 -: Lippenventil

- MLA -: Mittellängsachse
- P -: Pfeil

## Patentansprüche

1. Vorrichtung zum Begasen von Flüssigkeiten, mit folgenden Merkmalen:
a) ein lang gestrecktes, vertikal angeordnetes Gehäuse (1) weist an seinem oberen Ende (5) einen Einlassanschluss (7) für die Flüssigkeit und am gegenüberliegenden unteren Ende (17) einen Auslassanschluss (16) für die Flüssigkeit auf;
b) das Gehäuse (1) weist an seinem oberen Ende (5) einen Gaseinlass (8) auf;
c) der Innenraum des Gehäuses (1) gliedert sich in eine Wirbelkammer (2) und eine der Wirbelkammer (2) in Strömungsrichtung der Flüssigkeit nachgeschaltete Mischkammer (3), welche als freier Beruhigungsraum dient;
d) zwischen der Wirbelkammer (2) und der Mischkammer (3) befindet sich eine Engstelle (10);
e) die Wirbelkammer (2) ist in Richtung der Engstelle (3) trichterförmig verjüngt ausgeführt; und
f) das Verhältnis der Länge der Mischkammer (3) zur Länge der Wirbelkammer (2) liegt in einem Bereich von 3:1 bis 20:1.

2. Vorrichtung nach Anspruch 1, **dadurch gekennzeichnet, dass** die Wirbelkammer (2) einen runden Querschnitt besitzt.

3. Vorrichtung nach Anspruch 1 oder 2, **dadurch gekennzeichnet, dass** die Mischkammer (3) einen runden, ovalen oder elliptischen Querschnitt besitzt.

4. Vorrichtung nach einem der Ansprüche 1 bis 3, **dadurch gekennzeichnet, dass** das Verhältnis der Querschnittsflächen von Wirbelkammer (2) zu Mischkammer (3) in einem Bereich von 0,9:1 bis 1,1:1 liegt.

5. Vorrichtung nach einem der Ansprüche 1 bis 4, **dadurch gekennzeichnet, dass** das Verhältnis der Länge der Mischkammer (3) zur Länge der Wirbelkammer (2) in einem Bereich von 4:1 bis 10:1 liegt.

6. Vorrichtung nach einem der Ansprüche 1 bis 5, **dadurch gekennzeichnet, dass** das Verhältnis der Länge der Mischkammer (3) zur Länge der Wirbelkammer (2) in einem Bereich von 5:1 bis 8:1 liegt.

7. Vorrichtung nach einem der Ansprüche 1 bis 6, **dadurch gekennzeichnet, dass** das Verhältnis der Länge der Mischkammer (3) zur Länge der Wirbelkammer (2) in einem Bereich von 6:1 bis 7:1 liegt.

8. Vorrichtung nach einem der Ansprüche 1 bis 7, **dadurch gekennzeichnet, dass** ein in die Wirbelkammer (2) mündender Einströmkanal (11) für die Flüssigkeit exzentrisch zur Mittellängsachse (MLA) der Wirbelkammer (2) angeordnet ist.

9. Vorrichtung nach Anspruch 8, **dadurch gekennzeichnet, dass** der Einströmkanal (11) nach radial außen weist.

10. Vorrichtung nach einem der Ansprüche 1 bis 9, **dadurch gekennzeichnet, dass** der Gaseinlass (8) auf seinem der Wirbelkammer (2) zugewandten Ende ein als Rückschlagventil dienendes Lippenventil (18) aufweist.

11. Vorrichtung nach einem der Ansprüche 1 bis 10, **dadurch gekennzeichnet, dass** der Einlasskanal (9) des Gaseinlasses (8) koaxial zur Mittellängsachse (MLA) des Gehäuses (1) verläuft.

12. vorrichtung nach einem der Ansprüche 1 bis 11, **dadurch gekennzeichnet, dass** die Engstelle (10) in einem an dem Gehäuse (1) fixierten Einsatz (4) ausgebildet ist.

13. Vorrichtung nach einem der Ansprüche 1 bis 12, **dadurch gekennzeichnet, dass** das Verhältnis der Querschnittsfläche der Engstelle (10) zur maximalen Querschnittsfläche der Wirbelkammer (2) in einem Bereich von 1 % bis 5 % liegt.

14. Vorrichtung nach Anspruch 13, **dadurch gekennzeichnet, dass** das Verhältnis der Querschnittsflächen in einem Bereich von 1 % bis 2 % liegt.

15. Vorrichtung nach einem der Ansprüche 1 bis 14, **dadurch gekennzeichnet, dass** sich die Engstelle (10) zur Mischkammer (3) hin trichterförmig erweitert.

16. Vorrichtung nach einem der Ansprüche 1 bis 15, **dadurch gekennzeichnet, dass** ein unmittelbar vor oder hinter der Engstelle (10) angeordneter Trichter an seinem erweiterten Ende einen Trichterrand aufweist, welcher der Innenkontur der sich anschließenden Wirbelkammer (3) oder Mischkammer (2) entspricht.

17. Vorrichtung nach Anspruch 15 oder 16, **dadurch gekennzeichnet, dass** der Trichter (13) vor der Engstelle (10) einen kleineren Trichterwinkel aufweist als der Trichter (14) im Anschluss an die Engstelle (10).

18. Vorrichtung nach einem der Ansprüche 1 bis 17, **dadurch gekennzeichnet, dass** die Wirbelkammer (2) zumindest teilweise aus einem durchsichtigen Material besteht.

19. Vorrichtung nach einem der Ansprüche 12 bis 18, **dadurch gekennzeichnet, dass** der Einsatz (4) zumindest teilweise aus einem durchsichtigen Material besteht.

20. Vorrichtung nach einem der Ansprüche 1 bis 19, **dadurch gekennzeichnet, dass** die Mischkammer (3) einen sich in Längsrichtung erstreckenden durchsichtigen Bereich aufweist, der mit einer sich in Längsrichtung erstreckenden Skala versehen ist.

21. Vorrichtung nach einem der Ansprüche 1 bis 20, **dadurch gekennzeichnet, dass** die Mischkammer (3) aus einem durchsichtigen Material besteht.

22. Vorrichtung nach einem der Ansprüche 1 bis 21, **dadurch gekennzeichnet, dass** das eingeleitete Gas Kohlenstoffdioxid oder Sauerstoff ist und die Flüssigkeit trinkbar ist.

## Claims

1. Device for gassing fluids with the following characteristics:
a) an elongated vertically disposed housing (1) has, at its upper end (5) an inlet connection (7) for the fluid and, on the opposite lower end (17), an outlet connection (16) for the fluid;
b) the housing (1) has, at its upper end (5), a gas inlet (8):
c) the interior of the housing (1) is divided into a turbulence chamber (2) and a mixing chamber (3) disposed downstream of the turbulence chamber (2) in the direction of flow of the fluid, said mixing chamber serving as a free settling chamber;
d) there is a constriction (10) between the turbulence chamber (2) and the mixing chamber (3);
e) the turbulence chamber (2) has a lapered configuration in the manner of a funnel in the direction of the constriction (3); and
f) the ratio of the length of the mixing chamber (3) to the length of the turbulence chamber (2) is in a range of 3:1 to 20:1.

2. Device according to claim 1 **characterised in that** the turbulence chamber (2) has a round cross-section.

3. Device according to claim 1 or 2 **characterised in that** the mixing chamber (3) has a round, oval or elliptical cross-section.

4. Device according to one of claims 1 to 3 **characterised in that** the ratio of the cross-sections of the turbulence chamber (2) to the mixing chamber (3) is in a range of 0.9:1 to 1.1:1

5. Device according to one of claims 1 to 4 **characterised in that** the ratio of the length of the mixing chamber (3) to the length of the turbulence chamber (2) is in a range of 4:1 to 10:1.

6. Device according to one of claims 1 to 5 **characterised in that** the ratio of the length of the mixing chamber (3) to the length of the turbulence chamber (2) is in a range of 5:1 to 8:1.

7. Device according to one of claims 1 to 6 **characterised in that** the ratio of the length of the mixing chamber (3) to the length of the turbulence chamber (2) is in a range of 6:1 to 7:1.

8. Device according to one of claims 1 to 7 **characterised in that** an inflow channel (11) opening into the turbulence chamber (2) for the fluid is disposed eccentrically to the central longitudinal axis (MLA) of the turbulence chamber (2).

9. Device according to claim 8 **characterised in that** the inflow channel (11) is oriented radially outwards.

10. Device according to one of claims 1 to 9 **characterised in that** the gas inlet (8) has, on its end pointing towards the turbulence chamber (2), a lip valve (18) serving as a check valve.

11. Device according to one of claims 1 to 10 **characterised in that** the inlet channel (9) of the gas inlet (8) runs coaxially to the central longitudinal axis (MLA) of the housing (1).

12. Device according to one of claims 1 to 11 **characterised in that** the constriction (10) is formed in an insert (4) fixed on the housing (1).

13. Device according to one of claims 1 to 12 **characterised in that** the ratio of the cross-section of the constriction (10) to the maximum cross-section of the turbulence chamber (2) is in a range of 1% to 5%.

14. Device according to claim 13 **characterised in that** the ratio of the cross-sections is in a range of 1% to 2%.

15. Device according to one of claims 1 to 14 **characterised in that** the constriction (10) is widened in a funnel shape towards the mixing chamber (3).

16. Device according to one of claims 1 to 15 **characterised in that** a funnel disposed immediately before or behind the constriction (10) has, at Its widened end, a funnel edge which matches the internal contour of the adjoining turbulence chamber (3) or mixing chamber (2).

17. Device according to claim 15 or 16 **characterised in that** the funnel (13) has, before the constriction (10), a smaller funnel angle than the funnel (14) after the constriction (10).

18. Device according to one of claims 1 to 17 **characterised in that** the turbulence chamber (2) is made at least in part of a transparent material.

19. Device according to one of claims 12 to 18 **characterised in that** the insert (4) is made at least in part of a transparent material.

20. Device according to one of claims 1 to 19 **characterised in that** the mixing chamber (3) has a transparent area extending in a longitudinal direction, which is filled with a scale extending in a longitudinal direction.

21. Device according to one of claims 1 to 20 **characterised in that** the mixing chamber (3) is made of a transparent material.

22. Device according to one of claims 1 to 21 **characterised in that** the gas introduced is carbon dioxide or oxygen and the fluid is drinkable.

## Revendications

1. Dispositif de gazéification de liquides présentant les caractéristiques suivantes :
a) un boîtier (1) étiré en longueur, disposé verticalement présente un raccordement d'entrée (7) pour le liquide sur son extrémité supérieure (5) et un raccordement de sortie (16) pour le liquide sur l'extrémité inférieure opposée (17) ;
b) le boîtier (1) présente une entrée de gaz (8) sur son extrémité supérieure (5) ;
c) l'espace intérieur du boîtier (1) se divise en une chambre de turbulence (2) et une chambre de mélange (3) montée en aval de la chambre de turbulence (2) dans le sens d'écoulement du liquide, laquelle sert d'espace de stabilisation libre ;
d) un rétrécissement (10) se trouve entre la chambre de turbulence (2) et la chambre de mélange (3) ;
e) la chambre de turbulence (2) est réalisée de manière rétrécie en forme d'entonnoir en direction du rétrécissement (3) ; et
f) le rapport entre la longueur de la chambre de mélange (3) et la longueur de la chambre de turbulence (2) est compris entre 3:1 et 20:1.

2. Dispositif selon la revendication 1, **caractérisé en ce que** la chambre de turbulence (2) possède une section transversale ronde.

3. Dispositif selon la revendication 1 ou 2, **caractérisé en ce que** la chambre de mélange (3) possède une section transversale ronde, ovale ou elliptique.

4. Dispositif selon l'une quelconque des revendications 1 à 3, **caractérisé en ce que** le rapport entre les aires de section de la chambre de turbulence (2) et de la chambre de mélange (3) est compris entre 0,9:1 et 1,1:1.

5. Dispositif selon l'une quelconque des revendications 1 à 4, **caractérisé en ce que** le rapport entre la longueur de la chambre de mélange (3) et la longueur de la chambre de turbulence (2) est compris entre 4:1 et 10:1.

6. Dispositif selon l'une quelconque des revendications 1 à 5, **caractérisé en ce que** le rapport entre la longueur de la chambre de mélange (3) et la longueur de la chambre de turbulence (2) est compris entre 5:1 et 8:1.

7. Dispositif selon l'une quelconque des revendications 1 à 6, **caractérisé en ce que** le rapport entre la longueur de la chambre de mélange (3) et la longueur de la chambre de turbulence (2) est compris entre 6:1 et 7:1.

8. Dispositif selon l'une quelconque des revendications 1 à 7, **caractérisé en ce qu'**un canal d'afflux (11) débouchant dans la chambre de turbulence (2) pour le liquide est disposé de manière excentrée par rapport à l'axe médian longitudinal (MLA) de la chambre de turbulence (2).

9. Dispositif selon la revendication 8, **caractérisé en ce que** le canal d'afflux (11) est dirigé radialement vers l'extérieur.

10. Dispositif selon l'une quelconque des revendications 1 à 9, **caractérisé en ce que** l'entrée de gaz (8) présente une soupape à bec (18) servant de clapet antiretour sur son extrémité tournée vers la chambre de turbulence (2).

11. Dispositif selon l'une quelconque des revendications 1 à 10, **caractérisé en ce que** le canal d'entrée (9) de l'entrée de gaz (8) s'étend coaxialement à l'axe médian longitudinal (MLA) du boîtier (1).

12. Dispositif selon l'une quelconque des revendications 1 à 11, **caractérisé en ce que** le rétrécissement (10) est réalisé dans un insert (4) fixé sur le boîtier (1).

13. Dispositif selon l'une quelconque des revendications 1 à 12, **caractérisé en ce que** le rapport entre l'aire de section du rétrécissement (10) et l'aire de section maximale de la chambre de turbulence (2) est compris entre 1 et 5%.

14. Dispositif selon la revendication 13, **caractérisé en ce que** le rapport entre les aires de section est compris entre 1 et 2 %.

15. Dispositif selon l'une quelconque des revendications 1 à 14, **caractérisé en ce que** le rétrécissement (10) s'élargit en forme d'entonnoir vers la chambre de mélange (3).

16. Dispositif selon l'une quelconque des revendications 1 à 15, **caractérisé en ce qu'**un entonnoir disposé directement devant ou derrière le rétrécissement (10) présente, sur son extrémité élargie, un bord d'entonnoir qui correspond au contour intérieur de la chambre de turbulence (3) ou chambre de mélange (2) contiguë.

17. Dispositif selon la revendication 15 ou 16, **caractérisé en ce que** l'entonnoir (13) présente, devant le rétrécissement (10), un plus petit angle d'entonnoir que l'entonnoir (14) à la suite du rétrécissement (10).

18. Dispositif selon l'une quelconque des revendications 1 à 17, **caractérisé en ce que** la chambre de turbulence (2) se compose au moins en partie d'un matériau transparent.

19. Dispositif selon l'une quelconque des revendications 12 à 18, **caractérisé en ce que** l'insert (4) se compose au moins en partie d'un matériau transparent.

20. Dispositif selon l'une quelconque des revendications 1 à 19, **caractérisé en ce que** la chambre de mélange (3) présente une zone transparente s'étendant dans le sens longitudinal qui est pourvue d'une échelle graduée s'étendant dans le sens longitudinal.

21. Dispositif selon l'une quelconque des revendications 1 à 20, **caractérisé en ce que** la chambre de mélange (3) se compose d'un matériau transparent.

22. Dispositif selon l'une quelconque des revendications 1 à 21, **caractérisé en ce que** le gaz introduit est du dioxyde de carbone ou de l'oxygène et le liquide est buvable.
